# EUROPEAN PATENT SPECIFICATION

(11) **EP 2 409 022 B1**
(45) Date of publication and mention of the grant of the patent: **23.01.2013**
(21) Application number: 10710603.1
(22) Date of filing: 17.03.2010
(51) Int. Cl.: F03D 1/06

(54) **A WIND TURBINE BLADE HAVING A HINGED CONNECTION APPARATUS PROVIDING ELECTRICAL PROTECTION**
WINDTURBINENSCHAUFEL MIT EINER ELEKTRISCHEN SCHUTZ GEWÄHRENDEN SCHARNIERVERBINDUNGSVORRICHTUNG
PALE D'ÉOLIENNE PRÉSENTANT UN DISPOSITIF DE RACCORDEMENT ARTICULÉ PERMETTANT UNE PROTECTION ÉLECTRIQUE

(30) Priority: 20.03.2009 GB 0904869; 17.03.2009 US 160913 P
(43) Date of publication of application: 25.01.2012
(73) Proprietor: Vestas Wind Systems A/S, 8200 Aarhus N (DK)
(72) Inventor: WESTERGAARD, Carsten, Hein, Houston TX 77010 (US); HANCOCK, Mark, Hampshire SO15 5HN (GB); NARASIMALU, Srikanth, Singapore 535206 (SG)
(86) International application number: PCT/GB2010/000476
(87) International publication number: WO 2010/106317

(56) References cited:
- WO-A1-00/79128
- WO-A1-94/01325
- FR-A1- 2 826 066
- FR-A1- 2 863 320
- FR-A1- 2 883 902
- GB-A- 2 227 286
- US-A- 4 178 657

## Description

The invention relates to a wind turbine blade having a hinged connection apparatus for connecting a first wind turbine blade component to a second providing electrical protection, in particular where one of the first and second components is a wind turbine blade body and the other is a control surface, such as an aileron, of the wind turbine blade, see e.g. FR-A-2 863 320.

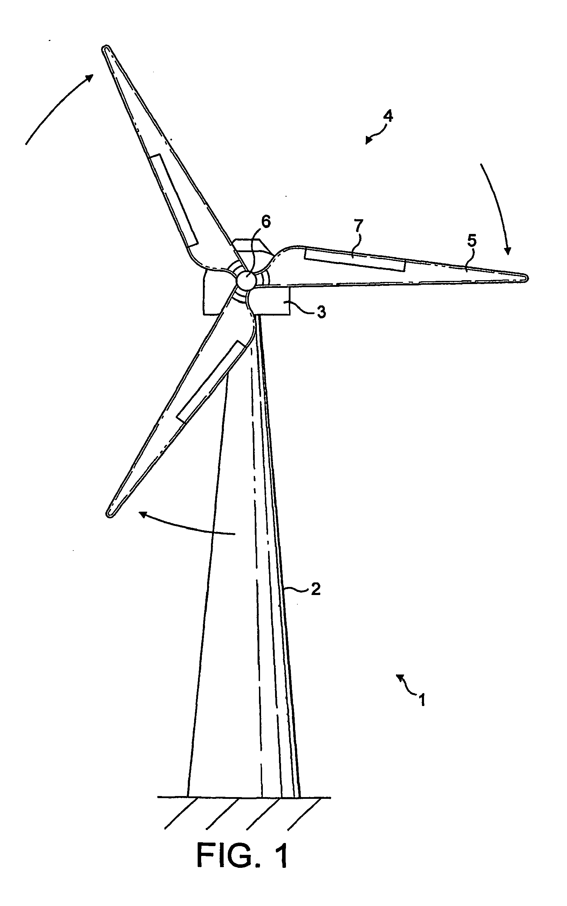

A typical horizontal axis wind turbine is illustrated in Figure 1 to which reference should now be made. Figure 1 illustrates a wind turbine 1, comprising a wind turbine tower 2 on which a wind turbine nacelle 3 is mounted. A wind turbine rotor 4 comprising at least one wind turbine blade 5 is mounted on a hub 6. The hub 6 is connected to the nacelle 3 through a shaft (not shown) extending from the nacelle front. The wind turbine illustrated in Figure 1 may be a small model intended from domestic or light utility usage, or may be a large model, such as those that are suitable for use in large scale electricity generation on a wind farm for example. In the latter case, the diameter of the rotor could be as large as 100 metres or more.

The blades of a wind turbine generator are designed to extract energy from the incident wind. The profile of the wind turbine blade is therefore an aerofoil, the shape of which results in a pressure difference on one side of the blade compared to other as the wind blows. As a result of the pressure difference the blade is turned around a central rotor hub causing rotation of the generator shaft and production of electricity.

Many models of wind turbine blades also comprise flaps or ailerons 7. As shown in Figure 1, these control surfaces are located at what is the trailing edge of the blade as the blade rotates under the influence of the wind. The angle at which the part of the blade surface made up by the flap or aileron 7 meets the rest of the blade surface can be adjusted to alter the aerodynamic characteristics of the blade's interaction with the wind. Flaps and ailerons are used in wind turbines with pitch control, and are used both to optimise the lift provided by the incident wind, and spill the wind if they generator is reaching overload. Both of these functions are critical to the everyday operation of wind turbines, and reliable operation of the ailerons and flaps is crucial for efficient and continued energy generation.

As with all wind turbine components, ease of installation and maintenance are important considerations. This is especially true for control surfaces such as ailerons or flaps, which are subject to constantly varying loads and stresses along their length, due to the incident wind pressure, environmental factors such as ice or accumulation of other undesirable matter, and the effect of their weight as they rotate around the central hub. Furthermore, they are subject to harsh environmental conditions, such as lightning strikes, wind, ice, and sea salt. Nevertheless, these control surfaces must remain capable of responding quickly to instructions from the wind turbine pitch control system to provide minute changes in angle of the control surface. There is an additional complication in that once installed, a repair engineer may only have access to the ailerons or flaps on site, many tens of meters above the ground and in some cases sea.

We have therefore appreciated that there is a need for control surfaces, such as ailerons or flaps that can be easily attached to the wind turbine blade, for the purposes of installation, repair or replacement. We have also appreciated that given the rigours of the day-to-day operation of ailerons and flaps, any connection or actuation system should be able to withstand the harsh environmental conditions in which they are required to operate.

### SUMMARY OF THE INVENTION

According to the invention, there is provided a wind turbine blade having a hinge apparatus for connecting first and second wind turbine blade components, the hinge apparatus comprising a first hinge housing for attachment to the first wind turbine blade component, the first hinge housing having a non-conductive interior portion defining an insulated hinge recess for receiving a hinge pin, and an electrically conductive outer portion, wherein an electrically sensitive component is housed inside the insulated hinge recess for protection against lightning strikes.

Preferably, the first hinge housing comprises a repositionable inner sleeve extendable between the first hinge housing and a second hinge housing attached to the second wind turbine blade component. This provides protection across the gap between the hinges.

The repositionable inner sleeve may be electrically conductive, providing protection against discharge from a lightning strike arcing into the interior of the hinge housing and damaging the electrically sensitive component.

In one example of the invention, the first and second wind turbine blade components each comprise a hinge edge, the hinge edge comprising: one or more hinge knuckles in which the hinge housing or hinge recess is formed; gaps between the hinge knuckles so that the hinge knuckles of the first and second components can be positioned adjacent one another in a co-axially linear arrangement. This allows a large flap to be securely connected to the blade at a plurality of hinge points.

The electrically sensitive component may be a cable, or an electrically actuated hinge pin. Further, the hinge pin may comprise: an actuator member for extending between the first and second wind turbine blade components; a first connector portion, located on the actuator member, for engaging with the first wind turbine blade component; a second connector portion, located on the actuator member, for engaging with the second wind turbine blade component; and a rotating element for rotating the first connector portion with respect to the second, and for thereby rotating the first wind turbine component with respect to the second wind turbine component.

The rotary actuator is therefore provided in the hinge mechanism connecting the first and second components and is provided with protection from external, environmental conditions. Additionally, the actuator mechanism requires less space for installation in the hinge wind turbine components as it is located conveniently in the hinge. Furthermore, the rotational force applied by the rotary actuator can be applied at each hinge to the hinged components directly. As a result, the force from each individual actuator need not be as great as if a single actuator was used to manipulate the components.

In one embodiment, the rotating element is a rotational motor located between the first and second connector portions. Advantageously, the rotational motor has a rotating drive shaft on which one of the first or second connector portions is provided, and a motor housing which forms the other of the first and second connector portions. This allows robust control of the actuator mechanism using electro-mechanical components that have been tried and tested in other fields, and which are easy to replace or repair.

In another embodiment, the rotating element is a piezo-electric torsional element provided between the first and second connector portions on the actuator member. These contain fewer moving parts than motors and in some implementations have been found to be more reliably.

Preferably, the hinge pin is moveable between a retracted and an extended position, for engaging, in said extended position with a hinge housing in the second wind turbine component; and the hinge apparatus comprises a positioning member for moving the hinge pin between said retracted and said extended position, and a latch for locking the hinge pin in at least said extended position. The hinge pins for attaching the wind turbine components to each other are therefore provided internally in at least one of the components. This allows the hinge pins to be pre-installed and transported as part of a unit, which once on-site allows the wind turbine components to be easily and reliably installed and repaired.

Preferably, the hinge pin is releasably mounted in the hinge housing. This allows the hinge pin to be easily installed in or removed from the wind turbine component as required. It will be appreciated that in the retracted position the hinge pin may be entirely or partially received in the hinge housing.

Further advantageously, the hinge pin is retained entirely within the hinge housing of the first wind turbine blade component in its retracted position. This protects the hinge pin when the wind turbine component is not yet installed, and allows the component to be easily positioned against the opposing wind turbine component at installation.

Furthermore, the hinge housing advantageously comprises a slot. The positioning member can then be provided as a fastener, mountable on the hinge pin such that it extends though the slot to the outside of the hinge housing. This allows an installation engineer to manually grip the fastener and move the hinge pin between the retracted and extended positions.

The fastener may have a screw thread, for tightening the fastener against the slot and providing the latch mechanism.

In an alternative embodiment to that mentioned above, the positioning member of the hinge pin may comprise a linear actuator for moving the hinge pin between its retracted and extended position in the hinge housing. This facilitates installation for locations where it is not straightforward for an engineer to be working directly on the blades.

In one embodiment, the first wind turbine component is the control surface of a wind turbine blade, and the second wind turbine component is a wind turbine blade body. In an alternative embodiment the first wind turbine component is a wind turbine blade body, and the second wind turbine component is the control surface of a wind turbine blade.

In embodiments where, the first wind turbine component is a wind turbine blade component, and the exterior of the wind turbine blade component is may be electrically shielded so that cables feeding the hinge housing can also be protected.

### BRIEF DESCRIPTION OF THE DRAWINGS

Preferred embodiments of the invention will now be described by way of example, and with reference to the drawings, in which:
Figure 1 is an elevation view of a wind turbine;
Figure 2 is a lateral cross-section illustrating a first example of the invention;
Figure 3 is an elevation view of a first example of the invention;
Figure 4 is an elevation view of a hinge pin;
Figure 5 is a side cross-sectional view through a hinge cylinder having a hinge recess for receiving the hinge pin of an adjacent hinge cylinder;
Figure 6 is a cross-sectional view through the hinge cylinder having a hinge recess for receiving the hinge pin of an adjacent hinge cylinder, as shown in Figure 5 along line VI-VI;
Figure 7 is a end view into a hinge cylinder having a hinge recess for receiving the hinge pin of an adjacent hinge cylinder, as shown in Figure 5 as direction VII;
Figure 8 is an end view of the hinge pin shown in Figure 4;
Figure 9 is an isometric view of a motorised rotational actuator;
Figure 10 is an isometric view of a second embodiment involving the motorised actuator;
Figure 11 is a cross-sectional view of the hinge housing showing its configuration in more detail.
Figure 12 is a further cross-sectional view of the hinge housing.

### DETAILED DESCRIPTION

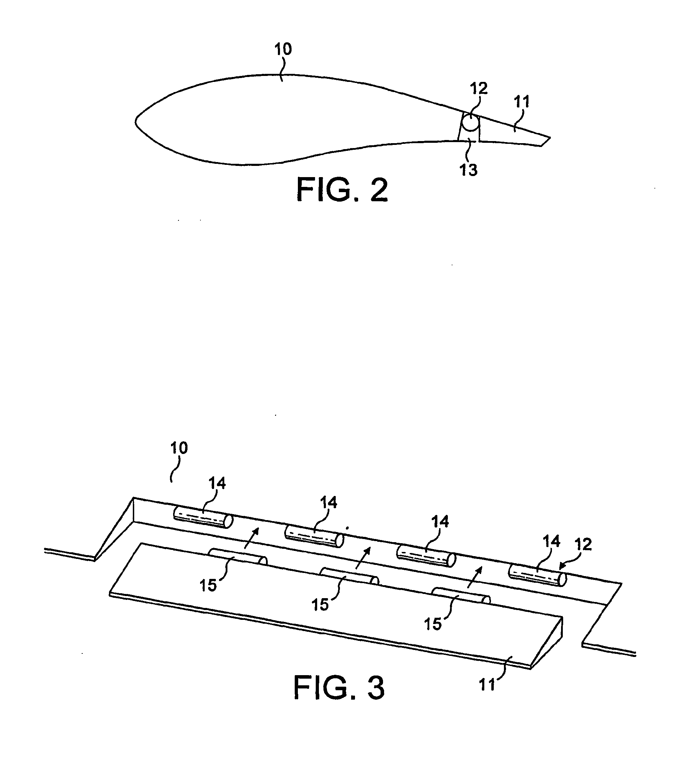

A first example of the invention will now be described with reference to Figures 2 and 3.

Figure 2 is a lateral cross-section through the blade, showing both a blade 10 and a control surface 11, otherwise known as a flap or aileron. The control surface 11 is joined to the blade 10 by a hinge mechanism 12 having hinge cylinders or knuckles, and hinge pins. The axis about which the hinge rotates is positioned just below the surface of the blade, so that the surface of the hinge cylinder is flush with the blade surface thereby avoiding disruption of the air flow across the surface of the blade. Alternatively, the hinge cylinder could also be located so that it is entirely under the blade surface, providing this still allows control of the aileron in the manner desired.

The top surface of the blade 10 is configured to contiguously join the hinge cylinder, or to cover it depending on the implementation. On the leeward side of the blade, a lip 13 extends from the blade 10 to partially cover the aileron 11, and maintain the aerodynamics of the desired flow of air.

Figure 3 is an elevation view showing in more detail how the control surface 11 is connected to the blade body 10 via the hinge mechanism 12. The hinge mechanism comprises one or more hinge cylinders 14 mounted on the control surface, and one more hinge cylinders 15 mounted on the blade body. When the control surface is in the correct position for connection to the blade body, the hinge cylinders 15 of the control surface 11 fit in between those of the blade body 10 so that the hinge cylinders 14 of both components are substantially coaxially aligned. The aligned hinge cylinders 14, 15 therefore form a hinge line 12 between the control surface 11 and the blade body 10. The end hinge cylinders of the hinge line may be placed on either the blade body or the control surface, but in a preferred example are located on the blade body 10. The hinge cylinders 14, 15 may be formed integrally to the blade body or control surface, as these components are manufactured, or may be formed separately and subsequently attached by a suitable bonding or welding method.

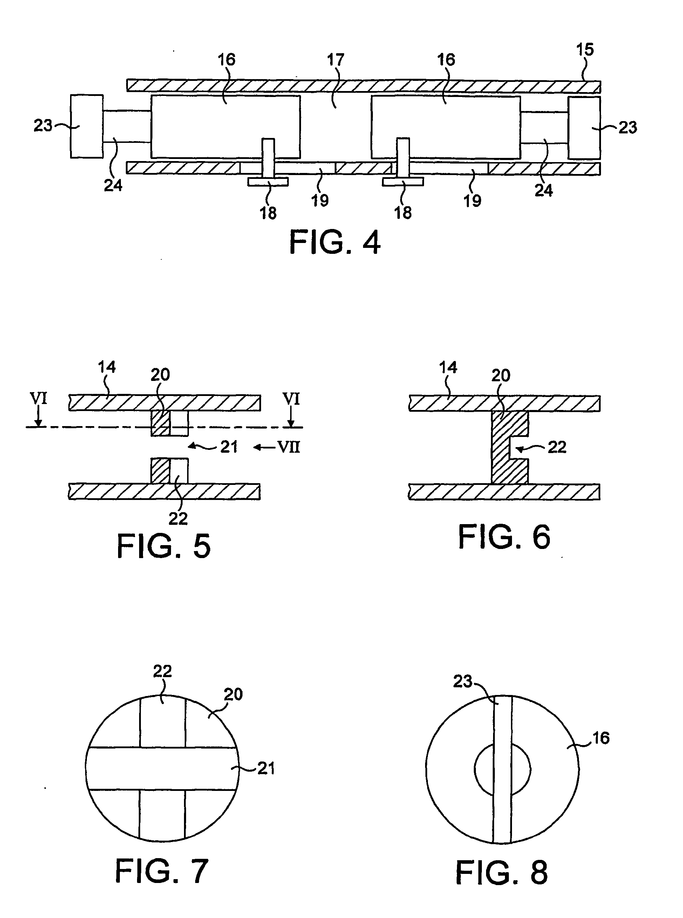

The hinge cylinders of the control surface and the blade body are joined together by extendable hinge pins, as will now be discussed in more detail and with reference to Figure 4.

The hinge pins 16 are initially provided in a retracted position inside a hinge recess or hinge housing 17 of the hinge cylinders 15 of the control surface 11. In order to form the operational hinge mechanism it is necessary to extend the hinge pins from their retracted position, into an extended position, in which they engage with the hinge recesses of the neighbouring hinge cylinders 14 on the blade body 10. Figure 4, shows a positioning element 18 provided in the form of a manual mechanism for extending the hinge pins. This positioning element comprises a fastener 18 mountably received in a bore on the hinge pin 16 to cooperate with a slot 19 in the hinge cylinder. When the hinge pin 16 is to be connected to the hinge cylinder of the blade body 10, an installation engineer can grasp the fastener 18 and slide the hinge pin 16 from its retracted position into its extended position.

Preferably, the fastener 18 is releasably attachable, by means of a screw thread or other mechanism, to the hinge pin 16. It is advantageous however if the fastener 18 is provided in the form of a locking screw, as by partially releasing the screw, the engineer can move the hinge pin 16, after which subsequently retightening the screw locks the hinge pin in place inside the control surface hinge cylinder 15. Thus, the fastener 18 can also act as a latch or locking mechanism. In this case, the slot 19 may be provided with cut-out portions for receiving the head of the fastener 18 when it is in a fully screwed down position, so that the fastener is flush in the slot 19 and correctly located with respect to the desired linear position of the hinge pin 16.

Alternatively, the positioning element 18 may comprise a tab formed of a resiliently compressible material so that the hinge pin 16 can be inserted into the hinge recess and removed from it with the tab still in place. In this case, a further retaining screw or bolt (not shown) may also be provided as a latch to secure the hinge pin in place in the extended position. The retaining screw or bolt preferably interacts with a corresponding recess (not shown) in the hinge pin 16. This separate latch in the form of a retaining screw or pin may also be provided in conjunction with the fastener shown in Figure 4.

Alternatively, the positioning element may comprise a cavity or recess designed to receive a positioning tool. Preferably, this is a specially shaped tool designed to cooperate with the cavity or recess without slipping. A screw driver and a tubular or screw-head shaped recess is a simple example.

It will be appreciated that in alternative examples extending the pin from the retracted position to the extended position may be achieved by any suitable means. In the example described above, a manually operated mechanism is illustrated. Electrically actuated embodiments are also possible if preferred. In this case the positioning element can be an electrically operated linear actuator, voice coil actuator or motor, provided with its own latching or locking mechanism. The linear actuator may for example drive a rotating member against a screw thread in the hinge housing or recess 17 so that the hinge pin is moved longitudinally. Alternatively, the linear actuator or motor may simply extend an arm into the recess to act against a wall inside the hinge housing, and thereby push the hinge pin in the opposite direction. Electrical cables can be run through the hinge cylinders themselves, or through the body of the flap or blade as desired. The linear actuator may therefore be controlled remotely.

Figure 4, shows two hinge pins 16, the leftmost pin is in a partially extended position, in which it lies partially inside the adjacent hinge cylinder 14 of the blade body 10, and provides a secure rotatable connection between the control surface and the blade body. The rightmost hinge pin is shown in a fully retracted position. Suitable actuator and control mechanisms for retaining and adjusting the angular position of the control surface 11 with respect to the blade body can be employed in accordance with practices known in the art.

The hinge pins have been described as initially provided in the hinge cylinders of the control surface. However, it will be appreciated that the interaction of the fastener 18 and slot 19 shown in Figure 4, means that the pins are always retained at least partially inside the hinge cylinder, even when extended. This is advantageous, as it means that the control surface 11 and its means for connection with the blade body 10 can be provided as a single unit for easy installation. It is not then necessary for the engineer to install each hinge pin 16 in the respective hinge cylinder when the control surface is to be attached. It also means that the hinge pins 16 will not inadvertently become detached from the control surface 11 or blade body 10, while the engineer is working on the hinge mechanism for maintenance or repair. However, in the preferred example, as the positioning element 18 is detachable, the hinge pins 16 can still removed from the hinge cylinders and new hinge pins inserted, if such are required.

Although, the hinge pins 16 are preferably initially housed with the hinge cylinders 15 of the control surface, they may in alternative examples be housed in the hinge cylinders 14 of the blade body. In this case, the control surface can be mounted on the wind turbine blade body 10, by positioning it correctly with respect to the body, and subsequently extending the hinge pins 16 into the corresponding hinge cylinders of the control surface.

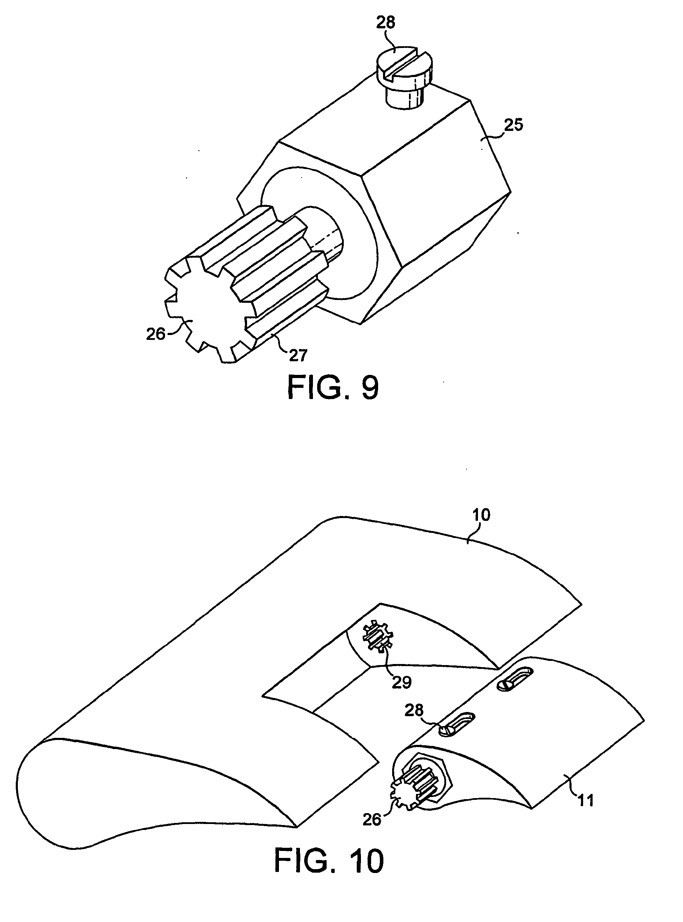

Although, in the examples above, the control surface 11 and blade body 10, have been described as connected by several hinge pins 16, it will be appreciated that in simple embodiments only two hinge pins 16 per control surface are required. An example of such an arrangement is later described in conjunction with Figure 10.

A second example of the invention will now be described in which the hinge pins and their connection with the hinge cylinders is used as a rotary actuator for adjusting the angle of the control surface 11 relative to the blade body 10.

The basic principle is that the hinge pin comprises connector portions for engaging with each of the hinge recesses in which the hinge pin is received, and a rotatable element, such as a motor or piezo-electrical torsional element, for rotating one connector portion with respect to the other. The rotation of the connector portions in turn rotates one wind turbine with respect to the other. The connector portions may be provided at either end of the hinge pin, with the hinge pin extending between them as this means that the connection of the hinge pin to the hinge recesses in the adjacent wind turbine components can be achieved most easily. In other embodiments, it is also possible that one or more of the connector portions are located at an intermediate position along the length of the hinge pin.

An example embodiment of such an actuator will now be described in more detail. As shown in Figures 5, 6 and 7, the hinge cylinders 14 provided on the blade body 10 of this embodiment are provided with opposing stops or shoulders 20. These limit the extent to which the hinge pins 16 can extend into the hinge recess 17 of the hinge cylinders 14 of the blade body, and therefore reduce the operational forces on the tab and retaining screws. The stops or shoulders 20 are shown to leave an intermediate space 21 between them at the centre of the hinge cylinder 14, though they could equally be provided as a plate that closes the hinge cylinder entirely. The space 21 is useful for the threading of cables, should these be required.

The stops or shoulders 20 are provided with a central groove 22 for receiving a corresponding rod-shaped actuator pin 23 provided at the end of the hinge pin 16. This is shown in Figure 8. When the hinge pin 16 is extended and the actuator pin 23 is received in the groove 22, the orientation of the control surface 11 and blade body 10 are fixed with respect to one another. The two components can no longer rotate independently as this would require the actuator pin 23 moving out of the groove 22, which is prevented by locking the hinge pin in place using the latch 18.

Although, the actuator pin 23 is illustrated here as being rod shaped, any actuator pin shapes that do not permit rotational movement with respect to the recess in which they are received would be suitable. Examples are shapes with straight edges and rotational symmetry, such as squares, other polygons, and stars. It will be appreciated that the actuator pin 23 and groove 22 form one of the connector portions mentioned above based on a plug and socket arrangement. Other more conventional plug and socket arrangements may therefore be used, according to the implementation.

In Figure 4, the positioning and locking mechanism provided by fastener 18 forms the other connector portion. Rotational movement of the actuator pin 23 relative to the fastener 18 can therefore be used to induce relative rotational movement between the hinge cylinder 14 on the blade body and the hinge cylinder 15 on the control surface 11. Assuming that the movement of the actuator pins 23 in each hinge cylinder in the hinge line is coordinated, this results in angular movement of the control surface to the blade body. An electrical control system (not shown) may be provided in order to do this.

In the example shown in Figure 4, the rotatable element is provided by section 24 of the hinge pin 16 on which the actuator pin 23 is mounted. The rotatable section 24 is a piezo electric torsional element. This is an electro-mechanical device in which a shearing motion can be induced if a current is supplied. In Figure 4, the necessary electrical cables, wires and connections are omitted for clarity. Under the influence of a current, the piezo electric element twists around its central longitudinal axis, applying a torque to one connector portion relative to the other. As a result, the positioning element 18 pushes against the groove 19, while the actuator pin 23 pushes against the groove 22 and relative rotation of the control surface to the blade results. Contact ridges or flanges for providing a lip of flange against which the twisting hinge pin 16 can push may also be provided if desired, to reduce the strain on the fastener 18. Although the section 24 is shown as a separate component of the hinge pin 16 in Figure 4, the entire hinge pin 16 may be provided as a piezo-electric torsional element if desired.

In alternative embodiments materials that change their shape according to external stimuli, such as shape memory alloys and shape memory polymers.

In a second example, the movement of the actuator pin is produced by mounting the actuator pin on a motorised rotary actuator. An example of this is shown in Figure 9.

In this case, the actuator pin has a different shape to that shown in Figures 4 and 8 and comprises a splined coupling 26 having eight vertices 27 for engaging with the connection shoulder 29 in the adjacent hinge cylinder. The splined coupling 26 is part of a shaft received in a motor body 25. The motor body 25 comprises a motor for turning the shaft, and the splined coupling, with respect to the motor body 25. The contact ridges mentioned above with reference to the hinge pin 16 can be seen more clearly here in the shape of the motor body. Particularly, the motor body 25 has flat faces that cooperate with the interior of the hinge recess 17 in the control surface 11. This prevents the motor body rotating as a reaction to the driving force it is applying through the coupling 26 to the connection shoulder. Further, the motor body 25 may be made of an electrically non-conductive composite material and coated with a friction reducing material such as polytetrafluoroethylene PTFE. The motor body 25, drive shaft and splined coupling 26 therefore serve the function of the hinge pin 16 described above.

A retaining screw 28 is provided on the motor body 25 to allow the motor to be moved between its extended and retracted position and also retained in position. As above, the retaining screw 28 can be moved in a slider slot. An illustration of this example is shown in Figure 10. The retaining screw therefore acts as the positioning member and the locking mechanism described above.

A single control surface 11 is provided having two extendable hinge pin rotary motors 25. The shape of the control surface 11 is designed to mesh with a complimentary recess on the blade body 10 so that it can easily be slid into place for installation, and easily removed for repair. The splined coupling 26 can also be seen to engage with a connection shoulder, in the shape of a complimentary splined hole 29 on the blade body 10, so that as the motor actuator turns, the control surface is moved relative to the blade.

The rotary motors may be a rotary type piezo motor, similar to that described above, a rotary pneumatic cylinder, or a gearbox based DC motor. Furthermore, in examples of the invention the motor may have a feedback device such as an encoder for closed loop control of position and velocity.

In the above examples, the latch or locking mechanism and positioning element described have been manually operated. If electrical actuators and latches are provided, these may comprise solenoid activated brakes that engage with the interior wall of the hinge recess. This provides a high stall torque for withstanding the aerodynamic pressure on the flap at the required position.

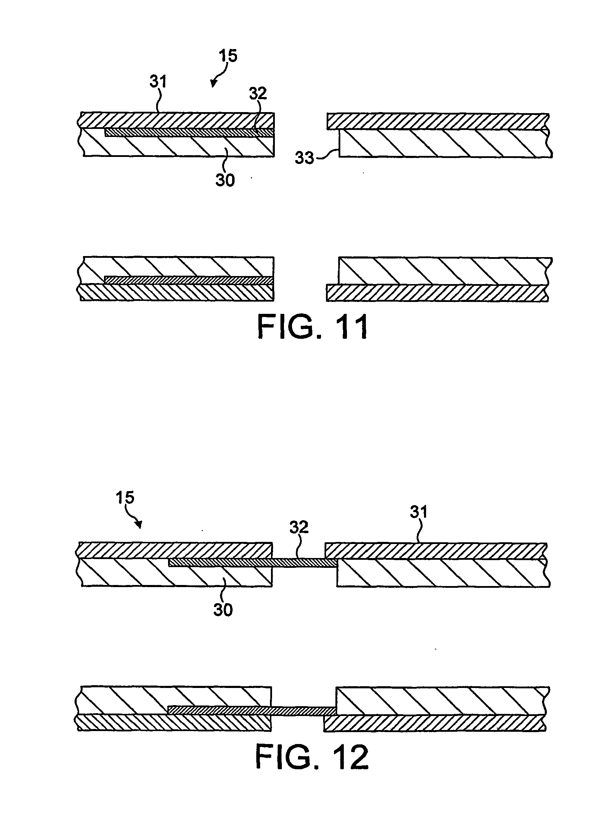

As illustrated in Figure 11, which shows the hinge housing 15 without the hinge pin in situ, the hinge housing 15 has an interior portion 30 and an exterior portion 31. Preferably, the interior portion 30 is made of a glass fibre composite material that is fatigue resistant and electrically non-conductive. The exterior 31 of the hinge housing on the other hand is preferably electrically conductive. In this way, any electrical cabling and indeed the hinge pin and actuator itself can be housed in the hinge recess and electrically isolated. This provides protection against lightning which frequently strikes wind turbine blades in operation due to their height and often exposed position. If the cables are to be taken through the flap or blade body, then it is preferred if the region of the flap and blade through which they pass is electrically shielded, by installing an electrically conductive skin material.

Additionally, an extendable conductive or non-conductive sleeve 32 may be provided to bridge the gap in-between one hinge housing and another to protect the hinge pin and actuators when they are in the extended position. The sleeve 32 can be provided in the hinge housing as a separate extendable portion that can be extended by suitable means, screw, tab or actuator (not shown) to extend slightly inside the cylinder of the neighbouring cylinder. A shoulder or stop 33 may be provided in the neighbouring hinge housing to accommodate the sleeve 32. Figure 12 shows the sleeve 32 in an extended position.

In Figure 10, a single aileron 11 is shown formed as a rotatable trailing edge in the blade body. It will be appreciated that a plurality of such ailerons may also be used on a single blade. Furthermore, the control surface is not limited to an aileron, but maybe any moveable part of a wind turbine blade, whether located at the trailing edge, the leading edge or otherwise. In other examples, the hinge pin may be used in any other moveable part of a wind turbine component.

In addition, although in the embodiments above the rotary actuator has been used to introduce rotation about a longitudinal axis, in alternative embodiments rotation in a different direction may be introduced, such as by bending in the longitudinal direction of the hinge pin 16. In a simple embodiment, this may be achieved by using a longitudinally orientated piezo electric element, such as a bimetallic strip, rather than the torsional element.

Although the description above discusses various examples of the invention, these examples are intended only to be illustrative and not to limit the scope of protection as it is defined by the claims. For example, the rotary actuator may be provided in embodiments in which the hinge pin is or is not extendable. Further, it will be appreciated that as the examples are related in the function and structure, features of one example may be useful incorporated into the embodiments of the other examples.

## Claims

1. A wind turbine blade comprising a hinge apparatus for connecting first and second wind turbine blade components (11,12), the hinge apparatus comprising a first hinge housing (15) for attachment to the first wind turbine blade component, the first hinge housing (15) having an outer surface, and an inner surface defining an insulated hinge recess for receiving a hinge pin (16), wherein an electrically conductive outer portion (31) of the first hinge housing (15) forms the outer surface, and a non-conductive interior portion (30) of the first hinge housing (15) forms the inner surface, and
wherein an electrically sensitive component (25) that is to be protected from lightning strikes is housed inside the insulated hinge recess for protection.

2. The wind turbine blade of claim 1, wherein the first hinge housing comprises a repositionable inner sleeve (32) extendable between the first hinge housing (14,15) and a second hinge housing (14, 15) attached to the second wind turbine blade component.

3. The wind turbine blade of claim 2, wherein the repositionable inner sleeve (32) is electrically conductive.

4. The wind turbine blade of claim 1, wherein the first and second wind turbine blade components each comprise a hinge edge, each hinge edge comprising:
one or more hinge housings;
gaps between the one or more hinge housings so that the hinge housings of the first and second blade components can be positioned adjacent one another in a co-axially linear arrangement.

5. The wind turbine blade of claim 1, wherein the electrically sensitive component is a cable.

6. The wind turbine blade of claim 1, wherein the hinge pin comprises the electrically sensitive component.

7. The wind turbine blade of claim 6, wherein the hinge pin comprises:
an actuator member for extending between the first and second wind turbine blade components;
a first connector portion, located on the actuator member, for engaging with the first wind turbine blade component;
a second connector portion, located on the actuator member, for engaging with the second wind turbine blade component; and
a rotating element for rotating the first connector portion with respect to the second, and for thereby rotating the first wind turbine blade component with respect to the second wind turbine component blade.

8. The wind turbine blade of claim 7, wherein the rotating element is a rotational motor located between the first and second connector portions.

9. The wind turbine blade of claim 8, wherein the rotational motor has a rotating drive shaft on which one of the first or second connector portions is provided, and a motor housing which forms the other of the first and second connector portions.

10. The wind turbine blade of claim 7, wherein the rotating element is a piezo-electric torsional element provided between the first and second connector portions on the actuator member.

11. The wind turbine blade of any preceding claim, wherein the hinge pin is moveable between a retracted and an extended position, for engaging, in said extended position with a hinge housing in the second wind turbine blade component; and the apparatus comprises:
a positioning member for moving the hinge pin between said retracted and said extended position; and
a latch for locking the hinge pin in at least said extended position.

12. The wind turbine blade of claim 11, wherein the hinge pin is releasably mounted in the hinge housing.

13. The wind turbine blade of 12, wherein the hinge pin is retained entirely within the hinge housing of the first wind turbine component in its retracted position.

14. The wind turbine blade of claim 13, wherein the hinge housing comprises a slot, and the positioning member is a fastener, mountable on the hinge pin such that it extends though the slot to the outside of the hinge housing.

15. The wind turbine blade of claim 14, wherein the fastener has a screw thread, for tightening the fastener against the slot and providing the latch.

16. The wind turbine blade of claims 9, 10 or 11, wherein the positioning member comprises a linear actuator for moving the hinge pin between its retracted and extended position in the hinge housing.

17. The wind turbine blade of any preceding claim, wherein the first wind turbine component is the control surface of a wind turbine blade, and the second wind turbine component is a wind turbine blade.

18. The wind turbine blade of any of claims 1 to 16, wherein the first wind turbine component is a wind turbine blade, and the second wind turbine component is the control surface of a wind turbine blade.

19. The wind turbine blade of claim 1, wherein the first wind turbine component is a wind turbine blade component, and the exterior of the wind turbine blade component is electrically shielded.

## Patentansprüche

1. Windkraftanlagenflügel, umfassend eine Scharniervorrichtung zum Verbinden einer ersten und einer zweiten Windkraftanlagen-Flügelkomponente (11,12), wobei die Scharniervorrichtung ein erstes Scharniergehäuse (15) zum Befestigen an der ersten Windkraftanlagen-Flügelkomponente umfasst, wobei das erste Scharniergehäuse (15) eine äußere Oberfläche und eine eine isolierte Scharnieraushöhlung zum Aufnehmen eines Scharnierstifts (16) definierende innere Oberfläche umfasst, wobei ein elektrisch leitfähiger äußerer Abschnitt (31) des ersten Scharniergehäuses (15) die äußere Oberfläche bildet und ein nicht leitender innerer Abschnitt (30) des ersten Scharniergehäuses (15) die innere Oberfläche bildet, und
wobei eine elektrisch empfindliche Komponente (25), die vor Blitzschlägen geschützt werden soll, zum Schutz in der isolierten Scharnieraushöhlung untergebracht ist.

2. Windkraftanlagenflügel nach Anspruch 1, wobei das erste Scharniergehäuse eine umpositionierbare innere Hülse (32) umfasst, die zwischen dem ersten Scharniergehäuse (14,15) und einem an der zweiten Windkraftanlagen-Flügelkomponente befestigten zweiten Scharniergehäuse (14,15) ausfahrbar ist.

3. Windkraftanlagenflügel nach Anspruch 2, wobei die umpositionierbare innere Hülse (32) elektrisch leitfähig ist.

4. Windkraftanlagenflügel nach Anspruch 1, wobei die erste und die zweite Windkraftanlagen-Flügelkomponente jeweils einen Scharnierrand umfassen, wobei die Scharnierränder jeweils Folgendes umfassen:
ein oder mehrere Scharniergehäuse;
Abstände zwischen den einen oder mehr Scharniergehäusen, so dass die Scharniergehäuse der ersten und der zweiten Flügelkomponente benachbart zueinander in einer koaxialen linearen Anordnung positioniert werden können.

5. Windkraftanlagenflügel nach Anspruch 1, wobei es sich bei der elektrisch empfindlichen Komponente um ein Kabel handelt.

6. Windkraftanlagenflügel nach Anspruch 1, wobei der Scharnierstift die elektrisch empfindliche Komponente umfasst.

7. Windkraftanlagenflügel nach Anspruch 6, wobei der Scharnierstift Folgendes umfasst:
ein Betätigungselement zum Ausfahren zwischen der ersten und der zweiten Windkraftanlagen-Flügelkomponente;
einen ersten Verbinderabschnitt, der sich an dem Betätigungselement befindet, um mit der ersten Windkraftanlagen-Flügelkomponente in Eingriff zu treten;
einen zweiten Verbinderabschnitt, der sich an dem Betätigungselement befindet, um mit der zweiten Windkraftanlagen-Flügelkomponente in Eingriff zu treten;
ein drehendes Element zum Drehen des ersten Verbinderabschnitts in Bezug auf den zweiten und zum dadurch Drehen der ersten Windkraftanlagen-Flügelkomponente in Bezug auf den zweiten Windkraftanlagen-Komponentenflügel.

8. Windkraftanlagenflügel nach Anspruch 7, wobei es sich bei dem drehenden Element um einen Drehmotor handelt, der sich zwischen dem ersten und dem zweiten Verbinderabschnitt befindet.

9. Windkraftanlagenflügel nach Anspruch 8, wobei der Drehmotor eine drehende Antriebswelle, auf der einer von dem ersten und dem zweiten Verbinderabschnitt vorgesehen ist und ein Motorgehäuse, das den anderen von dem ersten und dem zweiten Verbinderabschnitt bildet, aufweist.

10. Windkraftanlagenflügel nach Anspruch 7, wobei es sich bei dem drehenden Element um ein piezoelektrisches Torsionselement handelt, das zwischen dem ersten und dem zweiten Verbinderabschnitt an dem Betätigungselement vorgesehen ist.

11. Windkraftanlagenflügel nach einem der vorangehenden Ansprüche, wobei der Scharnierstift zwischen einer eingezogenen und einer ausgefahrenen Position bewegbar ist, um in der ausgefahrenen Position mit einem Scharniergehäuse in der zweiten Windkraftanlagen-Flügelkomponente in Eingriff zu treten; und wobei die Vorrichtung Folgendes umfasst:
ein Positionierelement zum Bewegen des Scharnierstifts zwischen der eingezogenen und der ausgefahrenen Position; und
einen Riegel zum Verriegeln des Scharnierstifts in mindestens der ausgefahrenen Position.

12. Windkraftanlagenflügel nach Anspruch 11, wobei der Scharnierstift lösbar in dem Scharniergehäuse angebracht ist.

13. Windkraftanlagenflügel nach 12, wobei der Scharnierstift in seiner eingefahrenen Position vollkommen in dem Scharniergehäuse der ersten Windkraftanlagenkomponente gehalten ist.

14. Windkraftanlagenflügel nach Anspruch 13, wobei das Scharniergehäuse einen Schlitz umfasst und es sich bei dem Positionierelement um ein Befestigungselement handelt, das an dem Scharnierstift angebracht werden kann, so dass es sich durch den Schlitz zum Äußeren des Scharniergehäuses erstreckt.

15. Windkraftanlagenflügel nach Anspruch 14, wobei das Befestigungselement ein Schraubengewinde aufweist, um das Befestigungselement an dem Schlitz festzuziehen und den Riegel vorzusehen.

16. Windkraftanlagenflügel nach Ansprüchen 9, 10 oder 11, wobei das Positionierelement eine Linearbetätigungsvorrichtung zum Bewegen des Scharnierstifts zwischen seiner eingezogenen und seiner ausgefahrenen Position in dem Scharniergehäuse umfasst.

17. Windkraftanlagenflügel nach einem der vorangehenden Ansprüche, wobei es sich bei der ersten Windkraftanlagenkomponente um die Leitfläche eines Windkraftanlagenflügels und bei der zweiten Windkraftanlagenkomponente um einen Windkraftanlagenflügel handelt.

18. Windkraftanlagenflügel nach einem der Ansprüche 1 bis 16, wobei es sich bei der ersten Windkraftanlagenkomponente um einen Windkraftanlagenflügel und bei der zweiten Windkraftanlagenkomponente um die Leitfläche eines Windkraftanlagenflügels handelt.

19. Windkraftanlagenflügel nach Anspruch 1, wobei es sich bei der ersten Windkraftanlagenkomponente um eine Windkraftanlagen-Flügelkomponente handelt und das Äußere der Windkraftanlagen-Flügelkomponente elektrisch abgeschirmt ist.

## Revendications

1. Pale de turbine d'éolienne comprenant un appareil articulé pour raccorder des premier et second composants de pale de turbine d'éolienne (11, 12), l'appareil articulé comprenant un premier boîtier articulé (15) pour fixer au premier composant de pale de turbine d'éolienne, le premier boîtier articulé (15) ayant une surface externe et une surface interne définissant un évidement articulé isolé pour recevoir une broche articulée (16), dans laquelle une portion externe conductrice de l'électricité (31) du premier boîtier articulé (15) forme la surface externe, et une portion interne non conductrice (30) du premier boîtier articulé (15) forme la surface interne, et dans laquelle un composant sensible à l'électricité (25) qui doit être protégé des coups de foudre est logé à l'intérieur de l'évidement articulé isolé pour sa protection.

2. Pale de turbine d'éolienne selon la revendication 1, dans laquelle le premier boîtier articulé comprend une douille interne repositionnable (32) qui peut s'étendre entre le premier boîtier articulé (14, 15) et un second boîtier articulé (14, 15) fixé au second composant de la pale de turbine d'éolienne.

3. Pale de turbine d'éolienne selon la revendication 2, dans laquelle la douille interne repositionnable (32) est conductrice de l'électricité.

4. Pale de turbine d'éolienne selon la revendication 1, dans laquelle les premier et second composants de la pale de turbine d'éolienne comprennent chacun un bord articulé, chaque bord articulé comprenant :
un ou plusieurs boîtiers articulés ;
des intervalles compris entre le ou les boîtiers articulés de sorte que les boîtiers articulées des premier et second composants de la pale puissent être positionnés adjacents l'un à l'autre dans un aménagement coaxialement linéaire.

5. Pale de turbine d'éolienne selon la revendication 1, dans laquelle le composant sensible à l'électricité est un câble.

6. Pale de turbine d'éolienne selon la revendication 1, dans laquelle la broche articulée comprend le composant sensible à l'électricité.

7. Pale de turbine d'éolienne selon la revendication 6, dans laquelle la broche articulée comprend :
un élément d'actionnement susceptible de s'étendre entre les premier et second composants de la pale de turbine d'éolienne ;
une première portion connectrice située sur l'élément d'actionnement pour s'engager sur le premier composant de la pale de turbine d'éolienne ;
une seconde portion connectrice située sur l'élément d'actionnement pour s'engager sur le second composant de la pale de turbine d'éolienne ; et
un élément rotatif pour faire tourner la première portion connectrice par rapport à la seconde et pour faire tourner de la sorte le premier composant de la pale de turbine d'éolienne par rapport au second composant de la pale de turbine d'éolienne.

8. Pale de turbine d'éolienne selon la revendication 7, dans laquelle l'élément rotatif est un moteur rotatif situé entre les première et seconde portions connectrices.

9. Pale de turbine d'éolienne selon la revendication 8, dans laquelle le moteur rotatif a un arbre d'entraînement rotatif sur lequel est prévue une des première ou seconde portions connectrices et un boîtier de moteur qui forme l'autre des première et seconde portions connectrices.

10. Pale de turbine d'éolienne selon la revendication 7, dans laquelle l'élément rotatif est un élément de torsion piézo-électrique aménagé entre les première et seconde portions connectrices sur l'élément d'actionnement.

11. Pale de turbine d'éolienne selon l'une quelconque des revendications précédentes, dans laquelle la broche articulée peut être déplacée entre une position de retrait et une position d'extension pour s'engager, dans ladite position d'extension, sur un boîtier articulé du second composant de la pale de turbine d'éolienne ; et l'appareil comprend :
un élément de positionnement pour déplacer la broche articulée entre ladite position de retrait et ladite position d'extension ; et
un verrou pour bloquer la broche articulée dans au moins ladite position d'extension.

12. Pale de turbine d'éolienne selon la revendication 11, dans laquelle la broche articulée est montée de manière libérable dans le boîtier articulé.

13. Pale de turbine d'éolienne selon la revendication 12, dans laquelle la broche articulée est retenue entièrement à l'intérieur du boîtier articulé du premier composant de la turbine d'éolienne dans sa position de retrait.

14. Pale de turbine d'éolienne selon la revendication 13, dans laquelle le boîtier articulé comprend une fente et l'élément de positionnement est une fixation qui peut être montée sur la broche articulée de sorte qu'elle s'étende à travers la fente vers l'extérieur du boîtier articulé.

15. Pale de turbine d'éolienne selon la revendication 14, dans laquelle la fixation a un filet de vis pour serrer la fixation contre la fente et fournir le verrou.

16. Pale de turbine d'éolienne selon la revendication 9, 10 ou 11, dans laquelle l'élément de positionnement comprend un actionneur linéaire pour déplacer la broche articulée entre sa position de retrait et sa position d'extension dans le boîtier articulé.

17. Pale de turbine d'éolienne selon l'une quelconque des revendications précédentes, dans laquelle le premier composant de turbine d'éolienne est la surface de commande d'une pale de turbine d'éolienne et le second composant de la turbine d'éolienne est une pale de turbine d'éolienne.

18. Pale de turbine d'éolienne selon l'une quelconque des revendications 1 à 16, dans laquelle le premier composant de turbine d'éolienne est une pale de turbine d'éolienne et le second composant de turbine d'éolienne est la surface de commande d'une pale de turbine d'éolienne.

19. Pale de turbine d'éolienne selon la revendication 1, dans laquelle le premier composant de turbine d'éolienne est un composant de la pale de turbine d'éolienne et l'extérieur du composant de la pale de turbine d'éolienne est protégé électriquement.
